(19) Europäisches Patentamt / European Patent Office / Office européen des brevets

(11) **EP 2 523 133 B1**

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(51) Int Cl.:
***G06F 17/50*** *(2006.01)*

(21) Anmeldenummer: **12003555.5**

(22) Anmeldetag: **07.05.2012**

(54) **Computerimplementiertes Verfahren zur Bestimmung von Instabilitätszuständen beim Umformen von Flachhalbzeugen sowie zugehöriges computerlesbares Medium und Computersystem**

Computer-implemented method for detecting instability when forming flat semi-finished products and associated computer readable medium and computer system

Procédé implémenté par ordinateur destiné à déterminer les états d'instabilité lors de la déformation des demi-produits plats ainsi que le support correspondant lisible sur ordinateur et le système informatique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2011 DE 102011101012**

(43) Veröffentlichungstag der Anmeldung:
**14.11.2012 Patentblatt 2012/46**

(73) Patentinhaber: **DYNAmore Gesellschaft für FEM Ingenieurdienstleistungen mbH**
**70565 Stuttgart (DE)**

(72) Erfinder:
• **Neukamm, Frieder**
  **10197 Stuttgart (DE)**
• **Feucht, Markus, Dr.**
  **71732 Tamm (DE)**
• **Haufe, André, Dr.**
  **73230 Kirchheim unter Teck (DE)**
• **DuBois, Paul**
  **63071 Offenbach (DE)**

(74) Vertreter: **Angerhausen, Christoph et al**
**Boehmert & Boehmert**
**Anwaltspartnerschaft mbB**
**Pettenkoferstrasse 22**
**80336 München (DE)**

(56) Entgegenhaltungen:
• **Merdan Basaran ET AL: "An Extension of the GISSMO Damage Model Based on Lode Angle Dependence", , 12. Oktober 2010 (2010-10-12), Seiten 1-15, XP055112044, LS-DYNA Forum 2010 Gefunden im Internet: URL:http://www.dynamore.de/en/downloads/papers/10-forum/papers/B-I-02.pdf [gefunden am 2014-04-03]**
• **Norman Herzig ET AL: "Experimentelle Ermittlung und Modellierung dynamischer Fließortkurven an Blechwerkstoffen", , 12. Oktober 2010 (2010-10-12), Seiten C - II - 29-C - II - 4, XP055112056, LS-DYNA Forum 2010 Gefunden im Internet: URL:http://www.dynamore.de/en/downloads/papers/10-forum/papers/C-II-04.pdf [gefunden am 2014-04-03]**
• **WIERZBICKI T ET AL: "Calibration and evaluation of seven fracture models", INTERNATIONAL JOURNAL OF MECHANICAL SCIENCES, PERGAMON PRESS, OXFORD, GB, Bd. 47, Nr. 4-5, 1. April 2005 (2005-04-01), Seiten 719-743, XP027736574, ISSN: 0020-7403 [gefunden am 2005-04-01]**

**Beschreibung**

Die vorliegende Erfindung betrifft ein computerimplementiertes Verfahren zur Anwendung in der Steuerung und Regelung von Umformmaschinen zum Zweck der Bestimmung von Instabilitätszuständen beim Umformen von Flachhalbzeugen mit dem Ziel, Instabilitätszustände zu vermeiden durch begleitende numerische Berechnungen innerhalb einer softwaretechnisch implementierten Optimierungsumgebung während der Produktion, außerdem ein zugehöriges computerlesbares Medium und ein Computersystem.

Als Ausgangshalbzeug werden in der Blechverarbeitung durch Walzen hergestellte Bleche, im Folgenden auch "Flachhalbzeuge" genannt, verwendet. Ausgehend von diesen ebenen Blechen erfolgt die Formgebung in einer oder mehrerer Umformstufen. Insbesondere durch die rasante Entwicklung in der Automobilindustrie hat die Blechumformung nachhaltig an Bedeutung gewonnen. Dabei werden im Karosseriebau hoch- und höchstfeste Stähle eingesetzt, mit dem Ziel, Gewicht einzusparen und damit für einen geringeren Ausstoß an $CO_2$ zu sorgen. Dabei muss allerdings die Herstellbarkeit und Crash-Sicherheit gewährleistet bleiben. Dies bedeutet zunächst, dass während der Herstellung in der Blechumformung kein Versagen (Risse) auftreten darf.

Allein durch bessere Methodenplanung und Prozessführung könnte der aktuelle Blechverschnitt allein im deutschen Automobilbau von 55% um 3% gesenkt werden, was etwa 10-15 kg pro Rohkarosse entspricht. Bei einem aktuellen Stahlpreis von ca. 1,0-1,5 (max.) €/kg und einer deutschen Automobiljahresproduktion von 13 Mio. Fahrzeugen ergibt sich bereits ein Einsparpotential von ca. 140 bis ca. 200 Mio. €. Darüber hinaus fordert der Markt 30-40% Kostenersparnis im Werkzeugbau, die durch eine Verringerung der Konstruktions- und Einarbeitungszeit neuer Umformwerkzeuge, eine Verringerung des Materialverbrauchs und höher ausgenutzte Konstruktionen und eine Erhöhung ihrer Standzeit erreicht werden soll. Bei der Umformung von Fahrzeugkarosserieteilen werden die beteiligten Kontaktpartner Werkzeug und Werkstück (Blechhalbzeug) höchsten tribologischen Belastungen ausgesetzt, die vorab zu bestimmen und mögliche Versagenszustände vor (d.h. während der Auslegung der Konstruktion in der Planungsphase) und während der Produktion (d.h. zur adaptiven Steuerung der Pressenparameter) zu kennen, einen erheblichen Wettbewerbsvorteil bieten. Durch die speziellen Anforderungen in jüngster Zeit an den Leichtbau sind die Reserven der Dicke und der Materialeigenschaften weitgehend ausgeschöpft. Eine einfache Übertragung des altgedienten, vorhandenen technischen Wissens für klassische Blechwerkstoffe auf moderne und teils neuartige, hochfeste Werkstoffe erfordert erfolgreiche Simulationen der herzustellenden Bauteile, die die belastbare Vorhersage von Versagenszuständen (i.e. Reißen, Instabilität) erlauben.

Aus den Vorgaben größerer Prozessflexibilität, höherer Prozesssicherheit, Qualitätssicherung und Kostenreduzierung ergibt sich ein erheblicher Bedarf an realitätsnahen Simulationsmethoden.

Die Blechumformung bei Karosseriebauteilen erfolgt in Umformwerkzeugen, in denen das Flachhalbzeug durch die Krafteinwirkung mehrerer Werkzeuge, wie Matrize, Stempel, Niederhalter usw. in die gewünschte Form gebracht wird. Dabei wird der Blechwerkstoff in unterschiedliche Richtungen unter Umständen bis an die Versagensgrenze, also bis zum Einreißen bzw. Verlust des Materialzusammenhaltes, gedehnt und verformt. Ziel einer jeden Umformtechnologie ist es daher, den Werkstoff möglichst optimal auszunutzen, also weit zu verformen, und zugleich den Verlust des Werkstoffzusammenhaltes, insbesondere Risse, zu vermeiden.

Der technische Nutzen der Erfindung besteht nun darin, mit einem technischen Verfahren unter Zuhilfenahme der Mathematik allein auf Basis der gewünschten Bauteilgeometrie und der Werkstoffeigenschaften eine Vorhersage bzgl. der Herstellbarkeit des Bauteils treffen zu können. Ein erfahrener Umformtechnologe kann für unbekannte Werkstoffe nur durch "try and error", d.h. durch die Variation von Herstellparametern (Niederhalterkräfte, Ziehsickengeometrie, Einlaufradien, Pressenkraft usw.), bei gegebener, realer Werkzeuggeometrie ein sogenanntes Gutteil (Bauteil, das den Qualitätsanforderungen entspricht) erzeugen. Dieser Vorgang ist zeitaufwändig und daher teuer. Die klassische Vorgehensweise mittels eines FLD (Forming Limit Diagramm) basiert auf dem Vergleich der ebenen Hauptdehnungen (hier ein Begriff aus der Mechanik - als technischer Begriff wird in der Regel der Umformgrad eingeführt), mit Grenzdehnungen die in Versuchen ermittelt werden. Diese Versuche weisen jedoch in der Regel einen proportionalen Dehnungspfad auf, der in der Realität der Bauteilherstellung, insbesondere für hoch- und höchstfeste Werkstoffe, nicht auftritt. Als Ausweg aus diesem Dilemma kann durch modernste Simulationsmethoden der tatsächliche Dehnungspfad berechnet, i.e. durch Methoden der Mechanik bestimmt werden. Vordinglichste Eigenschaft der Erfindung ist nun, dass diese simulationstechnisch ermittelten Größen (oder alternativ auch entsprechende am Realbauteil gemessene Größen) durch einfaches Vergleichen mit der gemäß der Erfindung ermittelten Fläche verglichen werden kann. Die nicht unerhebliche Erfindungshöhe liegt in der technischen Ermittlung besagter Fläche, die naturgemäß für jeden Werkstoff unterschiedlich ist. Die Ermittlung dieser Fläche erfolgt nun derart, dass die freien Parameter (Dreiachsigkeit und Dickenänderung) eine Vorhersage des Instabilitätszustandes unabhängig von Belastungspfad erlauben. Das heißt die Prognosefähigkeit des Verfahrens ist auch bei nichtproportionalen Dehnungspfaden gegeben und stellt damit gegenüber dem aktuellen Stand der Technik einen erheblichen Vorteil dar.

**Technischer Zusammenhang:**

Als Vorstufe zur Rissbildung wird gemeinhin das Erreichen der Instabilität angesehen. Zur quantitativen Erfassung der Formänderung beim Umformen werden Kenngrößen eingeführt, von denen der Umformgrad $\varphi$, mit dem die bleibende geometrische Änderung eines Werkstücks beim Umformen beschreiben wird, besondere Bedeutung hat, da aus ihm der Kraft- und Arbeitsbedarf für den Umformprozess berechenbar ist, so dass letztlich die Maschinenauswahl zweckmäßig getroffen werden kann.

Über geeignete Versuche (Zugversuche, Tiefungsversuche etc.) werden die Eigenschaften metallischer Werkstoffe ermittelt. Die auftretenden Dehnungen werden regelmäßig additiv in einen elastischen und einen plastischen Anteil aufgespalten:

$$\varepsilon = \varepsilon_e + \varepsilon_p \qquad\qquad (1)$$

Hierbei kann der elastische Anteil $\varepsilon_e$ bei großen Dehnungen vernachlässigt werden. Metalle verhalten sich überdies plastisch inkompressibel und sind damit volumenkonstant oder isochor. Damit gilt für drei orthogonale Raumrichtungen 1, 2, 3

$$\varphi_1 + \varphi_2 + \varphi_3 = 0 \qquad\qquad (2)$$

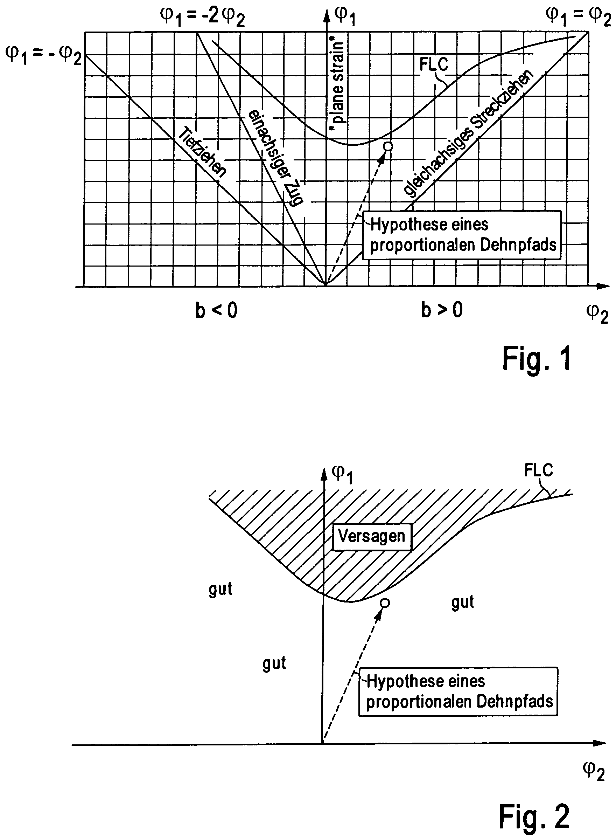

Im Allgemeinen betrachtet man vier besondere Formänderungszustände, die als Tiefziehen ($\varphi_1 = -\varphi_2$, $\varphi_3 = 0$), einachsiger Zug $\varphi_1 = -2\varphi_2$; $\varphi_2 = \varphi_3$), "plane strain" ($\varphi_2 = 0$, $\varphi_1 = -\varphi_3$) und gleichachsiges Streckziehen ($\varphi_1 = \varphi_2$, $\varphi_3 = -2\varphi_1$) bezeichnet werden und wie angegeben durch ihre jeweiligen Umformungsgrade gekennzeichnet sind. Dabei werden dünne Bleche zugrunde gelegt, so dass ein ebener Spannungszustand angenommen werden kann. Mit diesen vier Formänderungszuständen lassen sich alle Formänderungen eines Bleches hinreichend genau beschreiben. Dazu wird ein zweidimensionaler Raum $\varphi_1$, $\varphi_2$ aufgespannt, in dem die Formänderungszustände, wie in Figur 1 gezeigt, in einem Grenzformänderungsdiagramm FLD (*forming limit diagram*) definiert sind. Dabei ist der Betrag in Richtung der Achse $\varphi_1$ ein Maß für den Hauptumformungsgrad oder die erste Hauptdehnung, der Betrag in Richtung der Achse $\varphi_2$ ein Maß für den Nebenumformungsgrad oder die zweite Hauptdehnung in der Blechebene, wobei $\varphi_1$ und $\varphi_2$ normalerweise aus Experimenten mit Blechen basierend auf linearen, also proportionalen, Dehnungspfaden bestimmt werden. Kombinationen aus $\varphi_1$ und $\varphi_2$, die kritische Belastungszustände anzeigen, definieren die Grenzformänderungskurve FLC. Die Grenzformänderungskurve FLC (*forming limit curve*) gibt somit Zustände beginnender lokaler Einschnürung an. Die Bestimmung von Grenzformänderungskurven ist im Internationalen Standard ISO 12004-2 (2008) "Metallic materials - Sheet and Strip - Determination of forming-limit curves - Part 2: Determination of forming-limit curves in the laboratory" festgelegt.

Bei der konventionellen Bestimmung der Grenzformänderungskurve wird die Instabilität punktweise optisch oder mechanisch gemessen, wobei die experimentell ermittelten Grenzdehnungen in das zweidimensionale Grenzformänderungsdiagramm FLD wie in der Figur 2 dargestellt eingetragen werden. Die einzelnen Punkte aus dem Experiment werden in diesem Schaubild zu einer Linie, eben der Grenzformänderungskurve FLC, verbunden und dienen dann der Überprüfung der Herstellbarkeit eines bestimmten realen oder virtuellen Bauteils. Hierfür wird der Beanspruchungszustand jedes Materialpunkts oder aber auch nur einer Untermenge an repräsentativen Materialpunkten in das Grenzformänderungsdiagramm FLD eingetragen und geprüft, ob die entsprechenden Dehnungswerte ausreichend weit unterhalb der Grenzformänderungskurve FLC liegen. Diese Überprüfungen können konventionell (händisch) erfolgen, oder aber aus Zeit- und Kostengründen anhand von virtuellen Bauteilen mittels numerischer Verfahren.

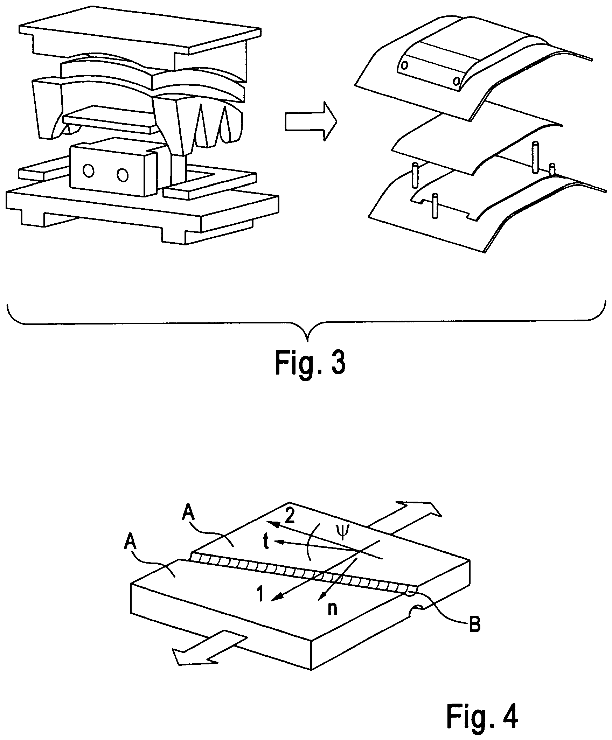

Die industriell etablierte Modellreduktion eines numerischen Verfahrens von der Realität zum Computermodell ist beispielhaft in Figur 3 dargestellt. Hierbei werden insbesondere weitreichende Annahmen für die Umformwerkzeuge getroffen, sodass die entstehenden Computermodelle mit jeweils aktueller Hardware einsetzbar sind.

Insbesondere durch gestiegene Gebrauchstauglichkeitsanforderungen, wie Gewichtsreduktion und Ressourcenschonung bei gleichem oder besserem Bauteilverhalten, werden derzeit vermehrt hoch- und höchstfeste Stähle in allen Industriezweigen eingesetzt. Hier zeigen die klassischen oben beschriebenen Methoden zur Bestimmung der Grenzformänderungskurve Schwächen: Diese liegen zum einen in der Annahme der schon angesprochenen proportionaler Dehnungspfade bei der Ermittlung der Grenzformänderungskurve und zum anderen in der ungenauen Bestimmung des Instabilitätspunktes im Experiment. Es werden daher Verfahren angestrebt, die eine Bestimmung der Instabilitätspunkte auf Basis des zugrunde liegenden Werkstoffes, bzw. seiner virtuellen Abbildung, und ggf. weiterer Parameter wie zum Beispiel der Blechdicke oder der Ausdünnung usw. ermöglichen. Die vorliegende Erfindung stellt eine neue Vorgehensweise in dieser Hinsicht dar.

Die EP 1 983 455 A2 beschreibt eine Grenzdehnungsanalyse lediglich unter Berücksichtigung der plastischen Dehnung des Materials. Es wird hierbei von einem Zielzustand des Materials, wie er in der rechnerischen Simulation des Umformprozesses bestimmt wurde, ausgegangen und die Prognose auf keine weiteren Parameter - im Gegensatz zur vorliegenden Erfindung - aufgebaut. Dabei kann der Zielzustand insbesondere über einen nichtproportionalen Verlauf der Spannung und Dehnung erreicht worden sein. Es wird nun ein proportionaler Verlauf einer Belastung und damit der Zustandsvariablen des Materials, insbesondere der Spannung $\sigma$ bestimmt, welcher zu demselben Zielzustand führt. Zu diesem proportionalen Belastungsverlauf wird der zugehörige proportionale Dehnungsverlauf ermittelt. Der Dehnungszustand, der aus diesem Dehnungsverlauf resultiert, wird als äquivalenter Dehnungszustand bezeichnet und kann im Grenzformänderungsdiagramm zur Beurteilung des Zielzustandes verwendet werden. Dabei wird der äquivalente Dehnungszustand in Bezug zur Grenzformänderungskurve für proportionale Dehnungsverläufe gesetzt.

Eine wesentliche Einflussgröße auf den Versagenspunkt ist der Umformweg, der das Aufeinanderfolgen unterschiedlicher Spannungszustände beschreibt. Wenn z.B. auf eine einachsige Zugbeanspruchung ein gleichachsiges Streckziehen erfolgt, zeigt der Werkstoff unter Umständen ein späteres Versagen, als wenn sich an ein gleichachsiges Streckziehen eine einachsige Zugbeanspruchung anschließt. Damit geht die Geschichte des Umformvorgangs in das Versagensrisiko ein. Auch wird die Anwendbarkeit der Grenzformänderungskurve (FLC) bei hochfesten Stählen eingeschränkt, da hier in der Regel keine proportionalen Dehnungspfade vorliegen. Zudem können andere, nachgelagerte Lastfälle, die in jedem Fall zu nichtproportionalen Dehnungspfaden führen, wie zum Beispiel die Versagensprognose in der Crashberechnung, nicht betrachtet werden. In Fachkreisen gilt daher die Anwendung des Grenzformänderungsdiagramms (FLD) für hochfeste Stähle, bei der technischen Bauteilauslegung sowie im Rahmen einer ganzheitlichen Bauteilbetrachtung als nicht zielführend.

Die Arbeit von Merdan Basaran et al. "An Extension of the GISSMO Damage Model Based on Lode Angle Dependence", XP055112044, spannt den Raum des FLD (forming limit diagram-Fließortkurve) aus Triaxialität, Verformung und "Lode-Winkel" oder "Lode-Parameter" auf. In diesem Raum wird der Bruch-Lokus bestimmt. Der Lode-Winkel ist eine deviatorische Invariante, die nicht der Dickenveränderung entspricht, wie sie erfindungsgemäß verwendet wird.

Norman Herzig et al.: "Experimentelle Ermittlung und Modellierung dynamischer Fließortkurven an Blechwerkstoffen", XP055112056, ist eine Arbeit, die sich mit der experimentellen Bestimmung der Fließortkurve beschäftigt. Es werden keine Simulationen durchgeführt.

Wierzbicki et al. "Calibration and evaluation of seven fracture models", International Journal of Mechanical Sciences, 2005, XP027736574, befasst sich mit der Kalibrierung von 7 Bruch-Modellen, die in kommerziellen Codes verwendet werden. Die Arbeit beinhaltet eine Abhandlung einer Methode, die der hier beanspruchten ähnelt, aber eine weitere deviatorische Invariante berücksichtigt, anstatt der erfindungsgemäß verwendeten Dickenänderung.

Es ist die Aufgabe der vorliegenden Erfindung, ein computerimplementiertes Verfahren zur Anwendung in der Steuerung und Regelung von Umformmaschinen zum Zweck der Bestimmung des Instabilitätspunktes beim Umformen von Flachhalbzeugen mit dem Ziel, Instabilitätszustände zu vermeiden durch begleitende numerische Berechnungen innerhalb einer softwaretechnisch implementierten Optimierungsumgebung während der Produktion, zur Verfügung zu stellen, mit dem die Vorhersage von Instabilitätszuständen bei Flachhalbzeugen einfacher und besser als bisher möglich gelingt, insbesondere müssen keine proportionalen Dehnungs- oder Belastungspfade vorausgesetzt werden. Auch sollen ein zugehöriges computerlesbares Medium sowie ein Computersystem zur Verfügung gestellt werden.

Diese Aufgabe wird zunächst durch ein computerimplementiertes Verfahren nach Anspruch 1 gelöst, wobei zu bemerken ist, dass das Verfahren im Prinzip auch händisch durchzuführen ist, die gängige technisch-industrielle Anwendung jedoch immer auf einer Computerimplementierung fußt. Vorteilhafte Ausgestaltungen sind Gegenstand der Unteransprüche.

Ein computerimplementiertes Verfahren zur Bestimmung des Instabilitätspunktes beim Umformen von Flachhalbzeugen weist erfindungsgemäß folgende Schritte auf:

(a) Bereitstellen von charakteristischen Merkmalen des Flachhalbzeuges und/oder des Materials, aus dem das Flachhalbzeug hergestellt ist, um Verformungsparameter zu ermitteln, in einer Datenbank eines Computers;

(b) Bestimmen der äquivalenten plastischen Verformung $\left( \varepsilon_p = \sqrt{\frac{2}{3}\, \underline{\underline{\varepsilon}}_p : \underline{\underline{\varepsilon}}_p} \right)$ in Abhängigkeit von der Triaxialität $\left( \dfrac{p}{\sigma_{vm}} \right)$ auf mindestens einem vorab festgelegten Belastungsweg, der proportionale und/oder nicht proportionale Belastungsanteile umfasst; wobei $p = tr(\sigma)/3$ der hydrostatische Anteil der Spannungen ist und $\sigma_{vm}$ die von Mises-Vergleichsspannungen darstellt, unter Verwendung der in der Datenbank bereitgehaltenen charakteristischen Merkmale oder der daraus ermittelten Verformungsparameter.

(c) Aufspannen eines dreidimensionalen Raumes mit den Koordinatenachsen $\dfrac{p}{\sigma_{vm}}$, $t/t_0$, $\varepsilon_p$, wobei $t/t_0$ ein beliebiges Maß für die Dickenänderung des Flachhalbzeuges ist und

$$-\frac{2}{3} \leq \frac{p}{\sigma_{vm}} \leq \frac{2}{3}\,;\ 0 \leq \frac{t}{t_0} \leq 1\,;\ \varepsilon_p \geq 0\,;$$

und

(d) Erzeugen der Fläche

$$\varepsilon_p \geq \left| \ln \frac{t}{t_o} \right|$$

in dem dreidimensionalen Raum.

Die von Mises-Vergleichsspannungen werden dabei in bekannter Weise aus den Spannungstensoren $\sigma$ abgeleitet.

Die Erfindung basiert auf der Erkenntnis, dass die Deformationsgeschichte des Flachhalbzeuges in einfacher Weise durch Berücksichtigung der äquivalenten plastischen Verformung erfasst werden kann. Diese ist definiert als:

$$\varepsilon_p = \int_0^t \dot{\varepsilon}_p\, dt \qquad\qquad (3)$$

wobei $\dot{\varepsilon}_p$ die äquivalente plastische Verformungsgeschwindigkeit darstellt.

Erfindungsgemäß wird nun ein dreidimensionaler Raum aufgespannt, der die Parameterachsen Triaxialität $p/\sigma_{vm}$, relative Dicke $t/t_0$ und äquivalente plastische Dehnung $\varepsilon_p$ aufweist. Während die relative Dicke und die äquivalente plastische Dehnung kontinuierliche Parameter sind, kann sich die Triaxialität insbesondere bei Betrachtungen entlang der Prozesskette "Herstellbarkeit →Gebrauchstauglichkeit" diskontinuierlich ändern. Überdies ist eine Änderung der relativen Dicke immer mit einer gewissen plastischen Verformung oder plastischen Dehnung verbunden.

Alle drei Parameter sind beschränkt:

$$-\frac{2}{3} \leq \frac{p}{\sigma_{vm}} \leq -\frac{1}{3} \quad \text{(biaxialer Druck)}; \qquad -\frac{1}{3} \leq \frac{p}{\sigma_{vm}} \leq 0 \quad \text{(Druck-Scherung)}$$

$$0 \leq \frac{p}{\sigma_{vm}} \leq +\frac{1}{3} \quad \text{(Zug-Scherung)}; \qquad +\frac{1}{3} \leq \frac{p}{\sigma_{vm}} \leq +\frac{2}{3} \quad \text{(biaxialer Zug)}$$

$$0 \leq \frac{t}{t_0} \leq 1\,;\quad \varepsilon_p \geq 0$$

Für kritische Kombinationen dieser drei Parameter wird lokale Einschnürung auftreten. Diese kritischen Kombinationen definieren eine zusammenhängende Fläche in dem dreidimensionalen Raum, die erfindungsgemäß als Lokalisierungsfläche bezeichnet wird. Man kann zeigen, dass die Zustände, die unterhalb der Lokalisierungsfläche angeordnet sind, in der Praxis nicht erreicht werden können. Die einzelnen Zustände werden unabhängig vom Belastungsweg erreicht, selbst bei diskontinuierlicher Triaxialität. Damit stellt die Erfindung auf einfachste Weise ein Kriterium zur Bestimmung von Instabilitätspunkten beim Umformen von Flachhalbzeugen zur Verfügung.

Die Erfindung erlaubt die Vorhersage der Werkstoffinstabilität von beliebigen Flachwerkstoffen während der Umformung, d. h. bei der Herstellung von Bauteilen, ebenso wie in der nachgerichteten Belastung in Crash- oder anderen Gebrauchstauglichkeitslastfällen. Herausragendes Merkmal ist die Berücksichtigung der Belastungsgeschichte zur Instabilitätsprognose. Die notwendige Erfindungshöhe ergibt sich aus der Erkenntnis der Abhängigkeit von Instabilitätszuständen von der Dreiachsigkeit und der relativen Dicke, sowie der Tatsache, dass die generierte Fläche unabhängig vom Belastungspfad ist. Die Erfindung liefert eine bemerkenswerte Prognosefähigkeit und erlaubt durch ihre technische Umsetzung sowohl in numerischen Verfahren, als auch in traditionellen Anwendungen in der Pressenstraße, die vorteilhafte Entwicklung als auch die Steuerung und Regelung von Herstellprozessen.

Nach einer vorteilhaften Ausführungsform der Erfindung umfasst der Schritt (b) weiterhin:
für jeden Wert der Triaxialität

(b1) Berechnen der äquivalenten plastischen Verformung ($\varepsilon_1^A$) eines Hauptgebietes (A) des Flachhalbzeuges in einer ersten Hauptrichtung (1) als Minimum über alle Ausrichtungen ($\psi$) einer Einschnürung (B) in dem Hauptgebiet (A);

(b2) Berechnen der äquivalenten plastischen Verformung ($\varepsilon_2^A$) des Hauptgebietes (A) in einer zweiten Hauptrichtung (2) für den Wert der Triaxialität;

(b3) Berechnen der äquivalenten plastischen Deformation $\varepsilon_p$, wobei

weiter bevorzugt der Schritt (b1) inkrementell ausgeführt wird.

Bei der Erfindung wird auf eine Kombination von invarianten Spannungs- und Verzerrungsgrößen zur Bestimmung des Instabilitätszeitpunktes zurückgegriffen. Nach einem ersten Aspekt geschieht dies durch eine iterativ-inkrementelle Vorgehensweise während des Deformationsvorganges; nach einem zweiten Aspekt durch eine vergleichende Vorgehensweise, die den Instabilitätszeitpunkt über eine Tabellendefinition, abhängig von zwei oder mehr charakteristischen Größen, während oder nach dem Belastungsvorgang bestimmt. Dies erfordert die Bestimmung entsprechender Tabelleneinträge vor dem Deformationsvorgang aufgrund von Werkzeug- und Halbzeugeigenschaften.

Ein computerlesbares Medium, auf dem Befehle eines Computerprogramms gespeichert sind, das auf einem Speicher eines Computersystems eines Benutzers gespeichert und installiert werden soll, ist Gegenstand des Anspruchs 4 sowie der darauf rückbezogenen Unteransprüche. Die Befehle definieren das erfindungsgemäße Verfahren. Ein zugehöriges Computersystem ist in Anspruch 5 definiert.

Die Erfindung wird anhand der beigefügten Zeichnungsfiguren näher erläutert. Es zeigt:

Figur 1    ein Beispiel eines Grenzformänderungsdiagramms mit vier Formänderungszuständen;

Figur 2    ein Beispiel eines Grenzformänderungsdiagramms, das experimentell ermittelt worden ist;

Figur 3    die schematische Darstellung der Ableitung eines Computermodells aus einer Umformsituation in der Realität.

Figur 4    eine schematische Darstellung eines infinitesimalen Elements eines Flachhalbzeuges mit lokaler Einschnürung;

Figur 5    ein Ablaufdiagramm zum Bestimmen eines Punktes der Grenzformänderungskurve bei proportionaler Belastung;

Figur 6    ein Ablaufdiagramm zum Bestimmen eines Punktes der Grenzformänderungskurve bei nicht-proportionaler Belastung und beliebiger Orientierung der Einschnürung;

Figur 7    ein Beispiel einer Lokalisierungsfläche bei einer Triaxialität $+\dfrac{1}{3} \leq \dfrac{p}{\sigma_{vm}} \leq +\dfrac{2}{3}$;

Figur 8    ein Beispiel für einen Belastungspfad;

Figur 9    ein Beispiel einer Lokalisierungsfläche für nicht-proportionale Belastung;

Figur 10    eine Schnittansicht der Lokalisierungsfläche aus Figur 9 bei einer Triaxialität $\dfrac{p}{\sigma_{vm}} = +\dfrac{2}{3}$ (biaxialer Zug);

Figur 11 — eine Schnittansicht ähnlich der Figur 9, jedoch mit nicht proportionalen Lastpfaden;

Figur 12 — eine Schnittansicht für eine Triaxialität $\dfrac{p}{\sigma_{vm}} = +\dfrac{1}{3}$ (uniaxialer Zug);

Figur 13 — eine Schnittansicht für eine Triaxialität $\dfrac{p}{\sigma_{vm}} = +\sqrt{\dfrac{1}{3}}$ (ebener Verzerrungszustand);

Figur 14 — ein Beispiel einer erweiterten Lokalisierungsfläche für nicht-proportionale Belastung; und

Figur 15a und 15b — ein Beispiel für einen Belastungspfad bei einer erweiterten Lokalisierungsfläche.

Zunächst sollte die iterative-inkrementelle Vorgehensweise gemäß dem ersten Aspekt der vorliegenden Erfindung erläutert werden.

Iterativ-inkrementelle Ermittlung von Instabilitätszuständen

Z. Marciniak, K. Kuczynski,: "Limit Strains in the Processes of Stretch-Forming Sheet Metal", Int. J. Mech. Sci. Pergamon Press Ltd. 1967, Bd. 9, Seiten 609 bis 620, beschreibt ein Modell, in dem eine anfängliche Dickeninhomogenität senkrecht zur größten Hauptspannung Ursprung einer Einschnürung ist, die sich als schmales Band über das Blech erstreckt. Dieser Ansatz macht eine analytische Vorhersage des Grenzformänderungsdiagramms oder der Grenzformänderungskurve basierend auf dem Hutchinson-Neale-Modell möglich, das in dem Artikel von J.W. Hutchinson, K.W. Neale: "Sheet Necking-II. Time-independent behavior", Mechanics of Sheet Metal Forming (1978) 237, Hrsg. Donald P. Koistinen und Neng-Ming Wang, Seiten 127 bis 153, beschrieben ist und das auf einer Bifurkationsanalyse beruht. Weitere Voraussetzungen sind isochore Plastizität, isotropes Verfestigen, in Abhängigkeit von der Geschwindigkeit, proportionale Belastungen, Betrachtung nur ebener Spannungszustände. Wie bisher sind kleine elastische Deformationen zu vernachlässigen. Schließlich geht die "von Mises"-Fließfläche (Fließort) sowie das zugehörige Potential (Fließrichtung) ein.

Definitionen

Zunächst werden die Eigenvektoren der Spannung, der plastischen Verformungsgeschwindigkeit und der plastischen Verformung definiert:

$$\begin{pmatrix} \sigma_1 & 0 & 0 \\ 0 & \sigma_2 & 0 \\ 0 & 0 & \sigma_3 \end{pmatrix} = \Phi_\sigma^T \sigma \Phi_\sigma \qquad \begin{pmatrix} \dot{\varepsilon}_1 & 0 & 0 \\ 0 & \dot{\varepsilon}_2 & 0 \\ 0 & 0 & \dot{\varepsilon}_3 \end{pmatrix} = \Phi_{\dot{\varepsilon}}^T \dot{\varepsilon} \Phi_{\dot{\varepsilon}} \qquad \begin{pmatrix} \varepsilon_1 & 0 & 0 \\ 0 & \varepsilon_2 & 0 \\ 0 & 0 & \varepsilon_3 \end{pmatrix} = \Phi_\varepsilon^T \varepsilon \Phi_3 \qquad (4)$$

Bei einer proportionalen Belastung folgt mit Hilfe der Fließtheorie und der Deformationstheorie

$$\Phi_\sigma = \Phi_{\dot{\varepsilon}} = \Phi_\varepsilon.$$

Es soll ein dünnes Blech betrachtet werden, das in ein Hauptgebiet A und in das Lokalisierungsband B, in dem als Imperfektion die Einschnürung auftritt, aufgeteilt ist. Auf das Hauptgebiet A wird eine proportionale Belastung, angezeigt durch die Pfeile in Figur 4, aufgebracht. Mit 1 werden die Koordinaten in Längs-, mit 2 in Querrichtung bezeichnet. In Bezug auf das Lokalisierungsband B mit dem Orientierungswinkel $\psi$ ergibt sich als Spannungstensor im n-t-Koordinatensystem:

$$\begin{pmatrix} \sigma_{nn}^A & \sigma_{nt}^A \\ \sigma_{nt}^A & \sigma_{tt}^A \end{pmatrix} = \begin{pmatrix} \cos\psi & \sin\psi \\ -\sin\psi & \cos\psi \end{pmatrix} \begin{pmatrix} \sigma_1^A & 0 \\ 0 & \sigma_2^A \end{pmatrix} \begin{pmatrix} \cos\psi & -\sin\psi \\ \sin\psi & \cos\psi \end{pmatrix} \qquad (5)$$

so dass sich die Komponenten des Zugtensors berechnen zu:

$$\sigma_{nn}^{A} = \sigma_{1}^{A} \cos^{2}\psi + \sigma_{2}^{A} \sin^{2}\psi$$
$$\sigma_{tt}^{A} = \sigma_{1}^{A} \sin^{2}\psi + \sigma_{2}^{A} \cos^{2}\psi \qquad (6)$$
$$\sigma_{nt}^{A} = (\sigma_{2}^{A} - \sigma_{1}^{A})\cos\psi \sin\psi$$

Proportionale Belastung

Wenn eine proportionale Belastung angelegt wird und isochore Plastizität vorausgesetzt wird, dann kann das Spannungsverhältnis

$$a = \sigma_{2}^{A}/\sigma_{1}^{A} \qquad (7)$$

und das Hauptdehnungsverhältnis

$$b = \frac{\Delta\varepsilon_{2}^{A}}{\Delta\varepsilon_{1}^{A}} = \frac{\varepsilon_{2}}{\varepsilon_{1}} \qquad (8)$$

definiert werden (im folgenden Formelsatz ist der Index für das Hauptgebiet A weggelassen). Es ist also b gleich dem Verhältnis von kleinerer Formänderung $\Delta\varepsilon_{2}$ zu größerer Formänderung $\Delta\varepsilon_{1}$. Dabei gilt für den ebenen Spannungszustand die Beziehung

$$a = \frac{1+2b}{2+b} \Leftrightarrow b = \frac{2a-1}{2-a} \qquad (9)$$

Dies kann für alle Werte der Triaxialität $\tau = \dfrac{p}{\sigma_{vm}}$ mit $-\dfrac{2}{3} \le \tau \le \dfrac{2}{3}$ gezeigt werden, wie aus der nachfolgenden Tabelle 1 hervorgeht.

Tabelle 1

| Sortierung der Hauptspannungen: $\sigma_1 \ge \sigma_2 \ge \sigma_3$ |
|---|
| Biaxialer Zug: $\Delta\tau > 0$ und $\Delta\varepsilon_3 < 0$ |
| $+\dfrac{2}{3} \ge \tau \ge +\dfrac{1}{3} \Rightarrow \sigma_1 \begin{pmatrix} 1 & 0 & 0 \\ 0 & a & 0 \\ 0 & 0 & 0 \end{pmatrix} \Rightarrow 0 \le a = \dfrac{\sigma_2}{\sigma_1} \le 1 \Rightarrow \Delta\varepsilon_1 > 0$ |
| $\Rightarrow \Delta\varepsilon_1 \begin{pmatrix} 1 & 0 & 0 \\ 0 & b & 0 \\ 0 & 0 & -1-b \end{pmatrix} \approx \dfrac{\sigma_1}{3} \begin{pmatrix} 2-a & 0 & 0 \\ 0 & 2a-1 & 0 \\ 0 & 0 & -a-1 \end{pmatrix} \Rightarrow 1 \ge b = \dfrac{\Delta\varepsilon_3}{\Delta\varepsilon_1} = \dfrac{2a-1}{2-a} \ge -\dfrac{1}{2}$ |
| Zug-Scherung: $\Delta\tau > 0$ und $\Delta\varepsilon_2 < 0$ |

8

(fortgesetzt)

$$+\frac{1}{3} \geq \tau \geq 0 \Rightarrow \sigma_1 \begin{pmatrix} 1 & 0 & 0 \\ 0 & 0 & 0 \\ 0 & 0 & a \end{pmatrix} \Rightarrow -1 \leq a = \frac{\sigma_3}{\sigma_1} \leq 0 \Rightarrow \Delta\varepsilon_1 > 0$$

$$\Rightarrow \Delta\varepsilon_3 \begin{pmatrix} 1 & 0 & 0 \\ 0 & -1-b & 0 \\ 0 & 0 & b \end{pmatrix} \approx \frac{\sigma_1}{3} \begin{pmatrix} 2-a & 0 & 0 \\ 0 & -a-1 & 0 \\ 0 & 0 & 2a-1 \end{pmatrix} \Rightarrow -\frac{1}{2} \geq b = \frac{\Delta\varepsilon_3}{\Delta\varepsilon_1} = \frac{2a-1}{2-a} \geq -1$$

Druck-Scherung: $\Delta\tau < 0$ und $\Delta\varepsilon_2 > 0$

$$0 \geq \tau \geq \frac{-1}{3} \Rightarrow \sigma_3 \begin{pmatrix} a & 0 & 0 \\ 0 & 0 & 0 \\ 0 & 0 & 1 \end{pmatrix} \Rightarrow -1 \leq a = \frac{\sigma_1}{\sigma_3} \leq 0 \Rightarrow \Delta\varepsilon_3 < 0$$

$$\Rightarrow \Delta\varepsilon_3 \begin{pmatrix} b & 0 & 0 \\ 0 & -1-b & 0 \\ 0 & 0 & 1 \end{pmatrix} \approx \frac{\sigma_3}{3} \begin{pmatrix} 2a-1 & 0 & 0 \\ 0 & -a-1 & 0 \\ 0 & 0 & 2-a \end{pmatrix} \Rightarrow -\frac{1}{2} \geq b = \frac{\Delta\varepsilon_1}{\Delta\varepsilon_3} = \frac{2a-1}{2-a} \geq -1$$

Biaxialer Druck: $\Delta\tau < 0$ und $\Delta\varepsilon_1 > 0$

$$\frac{-1}{3} \geq \tau \geq \frac{-2}{3} \Rightarrow \sigma_3 \begin{pmatrix} 0 & 0 & 0 \\ 0 & a & 0 \\ 0 & 0 & 1 \end{pmatrix} \Rightarrow 0 \leq a = \frac{\sigma_2}{\sigma_3} \leq 1 \Rightarrow \Delta\varepsilon_3 < 0$$

$$\Rightarrow \Delta\varepsilon_3 \begin{pmatrix} -1-b & 0 & 0 \\ 0 & b & 0 \\ 0 & 0 & 1 \end{pmatrix} \approx \frac{\sigma_3}{3} \begin{pmatrix} -a-1 & 0 & 0 \\ 0 & 2a-1 & 0 \\ 0 & 0 & 2-a \end{pmatrix} \Rightarrow 1 \geq b = \frac{\Delta\varepsilon_2}{\Delta\varepsilon_3} = \frac{2a-1}{2-a} \geq -\frac{1}{2}$$

Beispiel: Biaxialer Zug

Im Folgenden soll als Beispiel die biaxiale Zugbelastung betrachtet werden, also $\frac{1}{3} \leq \tau \leq \frac{2}{3}$. Dann gilt:

$$\sigma_3 = 0$$
$$\sigma_{vm} = \sqrt{\sigma_1^2(1+a^2-a)} = \sigma_y(\varepsilon_p)$$
$$\varepsilon_3 = -(1+b)\varepsilon_1 \tag{10}$$
$$\varepsilon_p = \sqrt{\frac{4}{3}\varepsilon_1^2(1+b+b^2)}$$

An der Grenzfläche zum Lokalisierungsband B gibt es zwei Gleichgewichtszustände und einen Kompatibilitätszustand:

$$\sigma_{nn}^{A} t^{A} = \sigma_{nn}^{B} t^{B}$$
$$\sigma_{nt}^{A} t^{A} = \sigma_{nt}^{B} t^{B}$$

$$\varepsilon_{tt}^{A} = \varepsilon_{tt}^{B}$$

(11)

Eine lokale Einschnürung wird angenommen, wenn das Gleichgewicht fordert, dass

$$d\varepsilon_{1}^{B} \geq \zeta \cdot d\varepsilon_{1}^{A}, \text{ wobei } \zeta \text{ ein Modellparameter ist.}$$

(12)

Das Modell wurde anfänglich entwickelt, um die linke Seite des Grenzformänderungsdiagramms (b < 0) abzudecken, in der der Ansatz nach Marciniak und Kuczynski nicht gültig ist, da der Orientierungswinkel der lokalen Einschnürung von 0 verschieden sein wird.

Es soll nun angenommen werden, dass sich eine lokale Einschnürung für irgendeine anfängliche Orientierung $\psi$ des Lokalisierungsbandes B entwickeln kann. Damit wird die Ausrichtung des Lokalisierungsbandes für den gesamten Deformationsprozess variabel. Der kritische Orientierungswinkel ist dadurch bestimmt, dass sich eine lokale Einschnürung für die minimale plastische Dehnung in dem Hauptgebiet A entwickelt. Die Hauptrichtungen von Zug und Dehnung im Hauptgebiet A und im Lokalisierungsband B werden unterschiedlich sein. Dies bedeutet, dass die Gleichungen zur Bestimmung des Gleichgewichts nicht auf einfache Weise zu lösen sind.

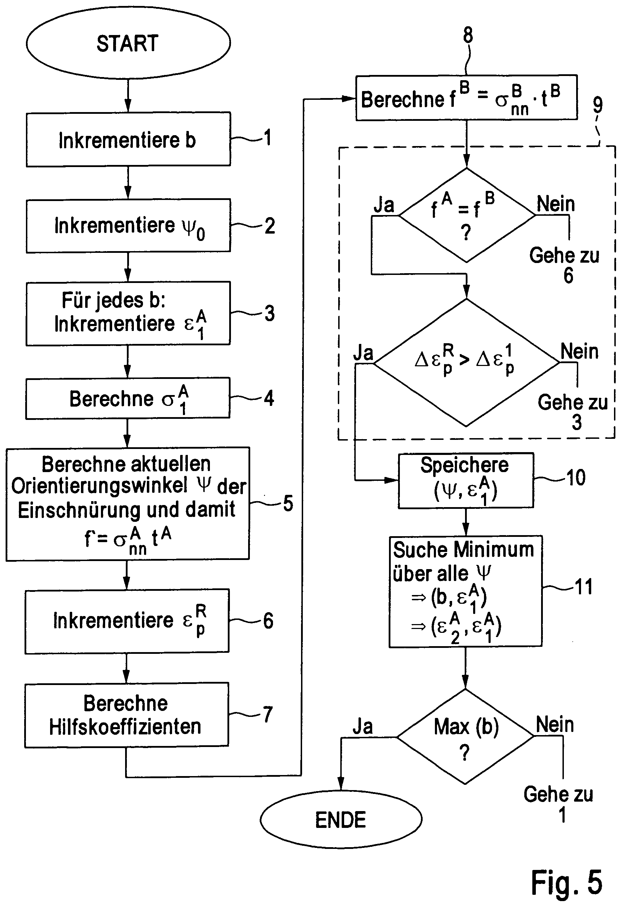

Im Folgenden soll eine Möglichkeit der analytischen Bestimmung des Grenzänderungsdiagramms angegeben werden, wobei ein variabler Orientierungswinkel angenommen wird. Dieses Verfahren besteht im Wesentlichen aus elf Schritten, die in der Figur 5 schematisch veranschaulicht sind.

Schritt 1: Inkrementiere b, beginnend vom minimalen b, wie es z. B. aus der Tabelle 1 hervorgeht

$$b = -\frac{1}{2} + (i-1)\Delta b \qquad -\frac{1}{2} \leq b \leq 1$$

(13)

Schritt 2: Inkrementiere den anfänglichen Orientierungswinkel $\psi_{0}$

$$\psi_{0} = (i-1)\frac{\pi}{2}\frac{1}{90} \qquad 0 \leq \psi_{0} \leq 90 \deg$$

(14)

Schritt 3: Inkrementiere die erste Hauptdehnung $\varepsilon_{1}^{A}$ im Hauptgebiet A für jeden Wert von b, beginnend mit einem kleinen Wert unter Verwendung eines Inkrements $\varepsilon_{1}^{A}$, das ausreichend klein ist.

$$\varepsilon_{1}^{A} = \varepsilon_{1,0}^{A} + (j-1)\Delta\varepsilon_{1}^{A}$$

(15)

Schritt 4: Berechne die erste Hauptspannung $\sigma_{1}^{A}$, speichere das Inkrement für die äquivalente plastische Dehnung:

$$\varepsilon_{p}^{A} = \sqrt{\frac{4}{3}(\varepsilon_{1}^{A})^{2}(1+b^{2}+b)} \Rightarrow \Delta\varepsilon_{p}^{A} = \sqrt{\frac{4}{3}(\Delta\varepsilon_{1}^{A})^{2}(1+b^{2}+b)}$$

(16)

$$\varepsilon_{3}^{A} = -\varepsilon_{1}^{a}(1+b) \Rightarrow t^{A} = e^{\varepsilon_{3}^{A}}t_{0}^{A} \approx (\varepsilon_{3}^{A}+1)t_{0}^{A}$$

(17)

Unter Verwendung der Beziehung (9) ergibt sich:

$$\sigma_{vm} = \sigma_y(\varepsilon_p^A) = \sqrt{(\sigma_1^A)^2(1+a^2-a)} \Rightarrow \sigma_1^A = \frac{\sigma_y(\varepsilon_p^A)}{\sqrt{(1+a^2-a)}} \tag{18}$$

Schritt 5: Berechne den aktuellen Orientierungswinkel des Lokalisierungsbandes und die sich ergebende Kraft $f = \sigma_{nn}^A t^A$ normal zum Lokalisierungsband mit

$$\psi = \tan^{-1}(e^{(1-b)\varepsilon_1^A} \tan\psi_0)$$
$$\sigma_{nn}^A = \sigma_1^A \cos^2\psi + \sigma_2^A \sin^2\psi \tag{19}$$

Schritt 6: Inkrementiere die erste äquivalente plastische Dehnung im Lokalisierungsband B, beginnend von der äquivalenten plastischen Dehnung im Hauptgebiet A und unter Verwendung eines Sub-Inkrements $\dfrac{\Delta\varepsilon_p^A}{n_\varepsilon}$, das klein genug ist:

$$\varepsilon_p^B = \varepsilon_p^A + (k-1)\frac{\Delta\varepsilon_p^A}{n_\varepsilon} \qquad \Delta\varepsilon_p^B = \Delta\varepsilon_p^A\left(1 + \frac{k-1}{n_\varepsilon}\right) \tag{20}$$

Schritt 7: Berechne folgende Koeffizienten:

$$C = \sqrt{\frac{3}{2}}$$
$$D = \frac{3(\sin^2\psi + b\cos^2\psi)^2}{4(1+b+b^2)}$$
$$E = \frac{\sqrt{3}(\sin^2\psi + b\cos^2\psi)}{4\sqrt{(1+b+b^2)}}(= \frac{\sqrt{D}}{2}) \tag{21}$$
$$H = \sqrt{1 + \left(\frac{2(b-1)\sin\psi\cos\psi}{(b+2)\cos^2\psi + (2b+1)\sin^2\psi}\right)^2}$$

Dieser Schritt dient der Vereinfachung der Rechnung und kann gegebenenfalls weggelassen werden.

Schritt 8: Berechne die Kraft $f = \sigma_{nn}^B t^B$, die sich im Lokalisierungsband B ergibt mit:

$$\sigma_{nn}^B = \frac{\sigma_y(\varepsilon_p^B)}{AH}\sqrt{1 - D\left(\frac{\Delta\varepsilon_p^A}{\Delta\varepsilon_p^B}\right)^2}$$

$$\Delta\varepsilon_3^B = \Delta\varepsilon_p^B\left(-\frac{C}{H}\sqrt{1 - D\left(\frac{\Delta\varepsilon_p^A}{\Delta\varepsilon_p^B}\right)^2} - E\frac{\Delta\varepsilon_p^A}{\Delta\varepsilon_p^B}\right) \tag{22}$$

$$\varepsilon_3^B = \varepsilon_3^B + \Delta\varepsilon_3^B \Rightarrow t^B = e^{\varepsilon_3^B}t_0^A(1-\xi) \approx (\varepsilon_3^B + 1)t_0^A(1-\xi)$$

wobei $\xi$ die Anfangsimperfektion ist, die durch

$$\xi = \frac{t_0^A - t_0^B}{t_0^A} \Rightarrow \frac{t_0^B}{t_0^A} = 1 - \xi \tag{23}$$

definiert ist.

Schritt 9: Prüfe, ob das Gleichgewicht (Gleichungen 11, 12) erreicht ist:

$$\sigma_{nn}^B t^B \neq \sigma_{nn}^A t^A \Rightarrow gehe\ zu\ Schritt\ 6$$
$$\sigma_{nn}^B t^B = \sigma_{nn}^A t^A \Rightarrow \begin{cases} \Delta\varepsilon_p^B \leq \zeta\Delta\varepsilon_p^A \Rightarrow gehe\ zu\ Schritt\ 3 \\ \Delta\varepsilon_p^B > \zeta\Delta\varepsilon_p^A \Rightarrow gehe\ zu\ Schritt\ 10 \end{cases} \tag{24}$$

Schritt 10: Speichere die äquivalente plastische Dehnung an der Einschnürung für diesen Winkel:

$$\left(\psi, \varepsilon_1^A\right) \tag{25}$$

Schritt 11: Suche das Minimum über alle Orientierungswinkel und definiere einen Punkt der Grenzformänderungskurve, falls das Maximum von b noch nicht erreicht ist, gehe zurück zum Schritt 1, ansonsten endet der Ablauf.

$$\left(b, \varepsilon_1^A\right)$$
$$\Rightarrow \left(\varepsilon_2^A, \varepsilon_1^A\right) \tag{26}$$

Um diese Gleichungen zu erhalten, ist zusätzlich zu den Gleichgewichts- und Kompatibilitätsbedingungen (Gleichungen 11, 12) und der Annahme eines ebenen Zuges ein isochores Fließen angenommen worden. Für einen Orientierungswinkel $\psi$=0 werden die Formeln von Marciniak und Kuczynski wiedergewonnen.

Damit kann jetzt der Einfluss der Verfestigungskurve auf das Grenzformänderungsdiagramm vorhergesagt werden.

Nicht-proportionale Belastungen

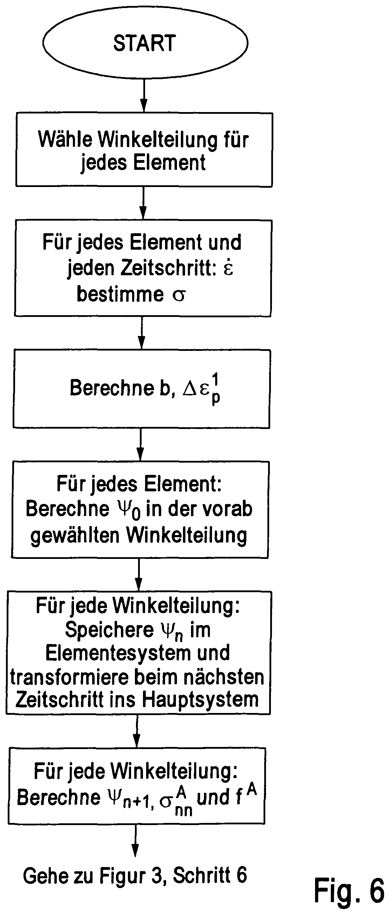

Im Folgenden soll die Berechnung auf nicht-proportionale Belastungen erweitert werden. Dazu ist es nötig, für jedes Element m Teilelemente zu speichern, wobei eines $\frac{90}{m}+1$ Grad abdecken soll. Für jede anfängliche Ausrichtung des Lokalisierungsbandes wird die aktuelle Ausrichtung und die aktuelle plastische Dehnung gespeichert. Damit werden pro Integrationspunkt ungefähr achtzig Variablen, die die Geschichte beschreiben, erforderlich. Das Inkrement basiert auf dem aktuellen Wert für b im Hauptgebiet A. Eine Überprüfung erfolgt, ob sich eine lokale Einschnürung bildet. Das Verfahren wird mit den folgenden Schritten ausgeführt, die in der Figur 6 dargestellt sind.

Schritt 1: Bestimme für jedes Element und für jeden Zeitschritt die Hauptrichtungen der Spannungen und das Inkrement der äquivalenten plastischen Dehnung

$$\begin{pmatrix} \sigma_1 & 0 & 0 \\ 0 & \sigma_2 & 0 \\ 0 & 0 & \sigma_3 \end{pmatrix} = \Phi_\sigma^T \sigma \Phi_\sigma \qquad \begin{pmatrix} \dot{\varepsilon}_1 & 0 & 0 \\ 0 & \dot{\varepsilon}_2 & 0 \\ 0 & 0 & \dot{\varepsilon}_3 \end{pmatrix} = \Phi_\varepsilon^T \dot{\varepsilon} \Phi_\varepsilon \tag{27}$$

Aus der assoziativen Plastizitätstheorie folgt $\Phi_\sigma = \Phi_\varepsilon$.

Schritt 2: Für jedes Element und für den aktuellen Zeitschritt kann nun b bestimmt werden. Das Inkrement der äquivalenten plastischen Dehnung ist ebenfalls bekannt, siehe Gleichung (8), so dass

$$\Delta\varepsilon_p^{\,A} = \sqrt{\frac{4}{3}(\Delta\varepsilon_1^{\,A})^2(1+b^2+b)} \tag{28}$$

Schritt 3: Verfolge für jedes Element bzw. Integrationspunkt die Entwicklung von m Nuten bzw. Rillen, die das Hauptgebiet B definieren, mit anfänglicher Imperfektion und anfänglichen Neigungen zwischen 0 und 90 Grad in Bezug auf das lokale System des Elements

$$\psi_0 = (i-1)\frac{\pi}{2}\frac{1}{m-1} \qquad\qquad 0 \leq \psi_0 \leq 90\,Grad \tag{29}$$

Schritt 4: Für jede Rille wird die aktuelle Ausrichtung relativ zu dem lokalen Koordinatensystem gespeichert und im nächsten Zeitschritt in das Hauptsystem transformiert

$$\begin{pmatrix} n \\ t \end{pmatrix} = \Phi_{\sigma_{n+1}}^{T} \begin{pmatrix} 1 \\ \tan\psi_n \end{pmatrix} \tag{30}$$

$$\tan\psi_n = \frac{n}{t}$$

Schritt 5: Berechnen für jede Nut oder Rille des aktuellen Orientierungswinkels in Bezug auf das aktuelle Hauptsystem und berechnen der Kraft $f = \sigma_{nn}^A t^A$ normal zu der Nut

$$\psi_{n+t} = \tan^{-1}\left(e^{(1-b)\Delta\varepsilon_1^A}\tan\psi_n\right)$$
$$\sigma_{nn}^A = \sigma_1^A\cos^2\psi + \sigma_2^A\sin^2\psi \tag{31}$$

Das Verfahren wird dann mit den Schritten 5 bis 11 wie zuvor beschrieben weitergeführt. Für jede Rille wird von der äquivalenten plastischen Dehnung und der Dickendehnung im vorangegangenen Zeitschritt begonnen. Lokale Einschnürung tritt für die Rille auf, wenn die kritische Bedingung (Gleichung 12) erfüllt ist.

Mit dem neuen Ansatz wird das Hutchinson-Neale-Modell wesentlich verbessert. Dieses Modell deckt lediglich den Bereich der Triaxialität von +2/3 (äquibiaxialer Zug) bis +1/3 (uniaxialer Zug) ab. Die Erweiterung der Formeln von Hutchinson-Neale auf Triaxialitäten kleiner als +1/3 erfordert eine sorgfältige Identifikation des Belastungszustandes, eine sorgfältige Definition der Verhältnisse aus Hauptbelastung und inkrementeller plastischer Hauptdehnung (a und b) sowie die Identifikation der Richtungen 1 und 2 gemäß Hutchinson-Neale aus den aktuellen Hauptachsen. Dann können alle Möglichkeiten für den Bereich der Triaxialität von +2/3 (äquibiaxialer Zug) bis -2/3 (äquibiaxialer Druck) ausgefüllt werden.

Wie zuvor wird b gemäß Gleichung (8) definiert, wobei Absolutwerte verwendet werden. Unter diesen Bedingungen bleiben die Formeln gemäß Hutchinson-Neale mit den folgenden Korrekturwerten gültig:

$$\Delta\varepsilon_1^A > 0 \Rightarrow \begin{cases} \sigma_1^A = \dfrac{\sigma_y(\varepsilon_p^A)}{\sqrt{(1+a^2-a)}} \\[2ex] \sigma_{nn}^B = \dfrac{\sigma_y(\varepsilon_p^B)}{CH}\sqrt{1-D\left(\dfrac{\Delta\varepsilon_p^A}{\varepsilon_p^B}\right)^2} \\[2ex] \Delta\varepsilon_3^B = \Delta\varepsilon_p^B\left(-\dfrac{C}{H}\sqrt{1-D\left(\dfrac{\Delta\varepsilon_p^A}{\Delta\varepsilon_p^B}\right)^2} - E\dfrac{\Delta\varepsilon_p^A}{\Delta\varepsilon_p^B}\right) \end{cases} \tag{32}$$

$$\Delta\varepsilon_1^A < 0 \Rightarrow \begin{cases} \sigma_1^a = -\dfrac{\sigma_y(\varepsilon_p^A)}{\sqrt{(1+a^2-a)}} \\[2ex] \sigma_{nn}^B = -\dfrac{\sigma_y(\varepsilon_p^B)}{CH}\sqrt{1-D\left(\dfrac{\Delta\varepsilon_p^A}{\Delta\varepsilon_p^B}\right)^2} \\[2ex] \Delta\varepsilon_3^B = -\Delta\varepsilon_p^B\left(-\dfrac{C}{H}\sqrt{1-D\left(\dfrac{\Delta\varepsilon_p^A}{\Delta\varepsilon_p^B}\right)^2} - E\dfrac{\Delta\varepsilon_p^A}{\Delta\varepsilon_p^B}\right) \end{cases} \tag{33}$$

Beispiel: Bestimmung der Lokalisierungsfläche für biaxiale Zugbelastung

Im Folgenden soll ein beispielhafter Ablauf gemäß dem computerimplementierten Verfahren der vorliegenden Erfindung anhand eines Ausführungsbeispiels näher erläutert werden.

Es sei angenommen, dass die Deformation des Flachhalbzeuges durch biaxialen Zug hervorgerufen wird. Unter Verwendung der Gleichung (10) gilt für die Triaxialität:

$$\frac{p}{\sigma_{vm}} = +\frac{1+a}{\sqrt{1+a^2-a}} \tag{34}$$

Für den ebenen Belastungszustand gilt immer die Beziehung (9). Damit wird der biaxiale Spannungszustand gekennzeichnet durch (vgl. Tabelle 1)

$$-\frac{1}{2} \le b \le 1 \tag{35}$$

Für den biaxialen Zug gilt weiter:

$$\varepsilon_3 = \ln\frac{t}{t_0} = -\left|\ln\frac{t}{t_0}\right| = -\varepsilon_1(1+b) \tag{36}$$

Die minimale äquivalente plastische Dehnung $\varepsilon_p$, die erforderlich ist, um eine Dickenänderung $t/t_0$ hervorzurufen, kann nun berechnet werden zu

$$\varepsilon_p = |\varepsilon_1| 2\sqrt{\frac{1+b+b^2}{3}} = \left|\ln\frac{t}{t_0}\right| \frac{2}{1+b}\sqrt{\frac{1+b+b^2}{3}} = \frac{2\ln\frac{t}{t_0}}{3\frac{p}{\sigma_{vm}}} \tag{37}$$

Das Minimum und das Maximum können mit den Grenzen für b angegeben werden als

$$b = 1 \Rightarrow \frac{p}{\sigma_{vm}} = -\frac{2}{3} \Rightarrow \varepsilon_p = -\ln\frac{t}{t_0} = \left|\ln\frac{t}{t_0}\right| \tag{38}$$

$$b = -\frac{1}{2} \Rightarrow \frac{p}{\sigma_{vm}} = -\frac{1}{3} \Rightarrow \varepsilon_p = -2\ln\frac{t}{t_0} = 2\left|\ln\frac{t}{t_0}\right| \tag{39}$$

In dem Fall der nicht proportionalen Belastung bei konstanter Triaxialität werden die Belastungszyklen die äquivalente plastische Dehnung erhöhen, jedoch nicht die Dickenänderung, so dass in diesen Fällen lediglich ausgesagt werden kann, dass

$$\varepsilon_p \geq \frac{2\ln\frac{t}{t_0}}{3\frac{p}{\sigma_{vm}}} \tag{40}$$

In dem Fall der nicht proportionalen Belastung mit variabler Triaxialität und damit variablem Wert für b kann die folgende Ungleichung abgeleitet werden

$$-\frac{1}{2} \leq b(\varepsilon_1) \leq 1 \Rightarrow 1+b \geq 0 \tag{41}$$

Mit

$$\varepsilon_1 = -\int\dot{\varepsilon_1} \leq \int\left|\dot{\varepsilon_1}\right| \tag{42}$$

$$\varepsilon_3 = -\int\dot{\varepsilon_1}(1+b) \geq -\int\left|\dot{\varepsilon_1}\right|(1+b) \Rightarrow |\varepsilon_3| \leq \int\left|\dot{\varepsilon_3}\right| \tag{43}$$

ergibt sich

$$\varepsilon_p = \int 2\left|\dot{\varepsilon_1}\right|\sqrt{\frac{1+b+b^2}{3}} = \int\frac{2\left|\dot{\varepsilon_3}\right|}{1+b}\sqrt{\frac{1+b+b^2}{3}} \Rightarrow \int\left|\dot{\varepsilon_3}\right| \leq \varepsilon_p \leq \int 2\left|\dot{\varepsilon_3}\right| \Rightarrow \varepsilon_p \geq |\varepsilon_3| = \left|\ln\frac{t}{t_0}\right| \tag{44}$$

Somit kann unabhängig vom Deformationsweg - selbst bei diskontinuierlicher Änderung von b und damit der Triaxialität - bei vorgegebener Dickendehnung die entsprechende äquivalente plastische Dehnung nicht kleiner werden als der Absolutwert der Dickenänderung.

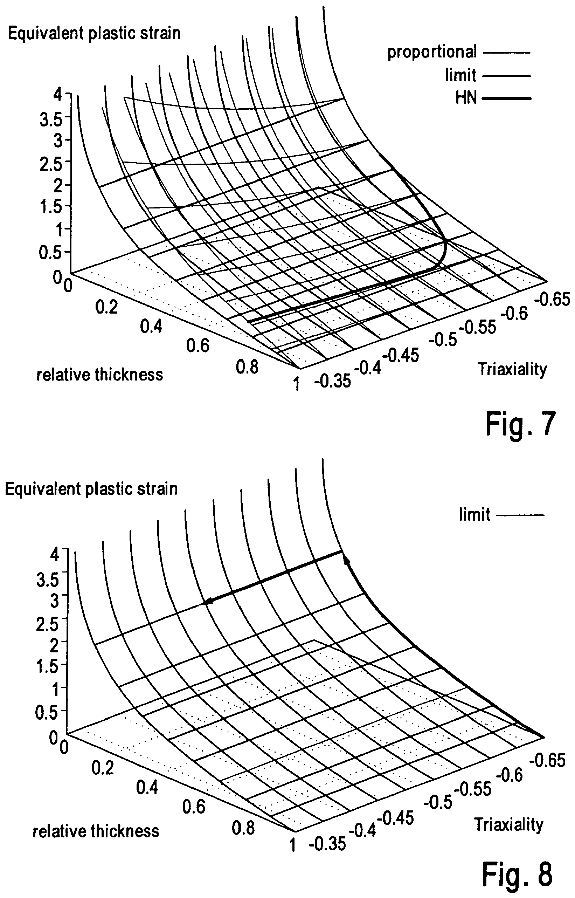

Figur 7 zeigt ein Beispiel einer Lokalisierungsfläche, wobei die biaxialen Zustände proportional sind. Zustände unterhalb der Lokalisierungsfläche können nie erreicht werden. Die Zustände auf der Lokalisierungsfläche und bestimmte Zustände oberhalb der Lokalisierungsfläche können entweder durch homogene oder durch lokalisierte Deformationsprozesse erreicht werden. Für eine gegebene Dickenänderung führt eine proportionale äquibiaxiale Zugbelastung zu der minimalen äquivalenten plastischen Dehnung. Alle Zustände auf der minimalen Fläche können durch nicht proportionale Belastung erreicht werden. Ein beispielhafter diskontinuierlicher Belastungsprozess, um eine gegebene Dickendehnung und Triaxialität zu erreichen, ist in Figur 8 angegeben. Der Zustand wird durch einen äquibiaxialen Zug und einen anschließenden Sprung in der Triaxialität erhalten.

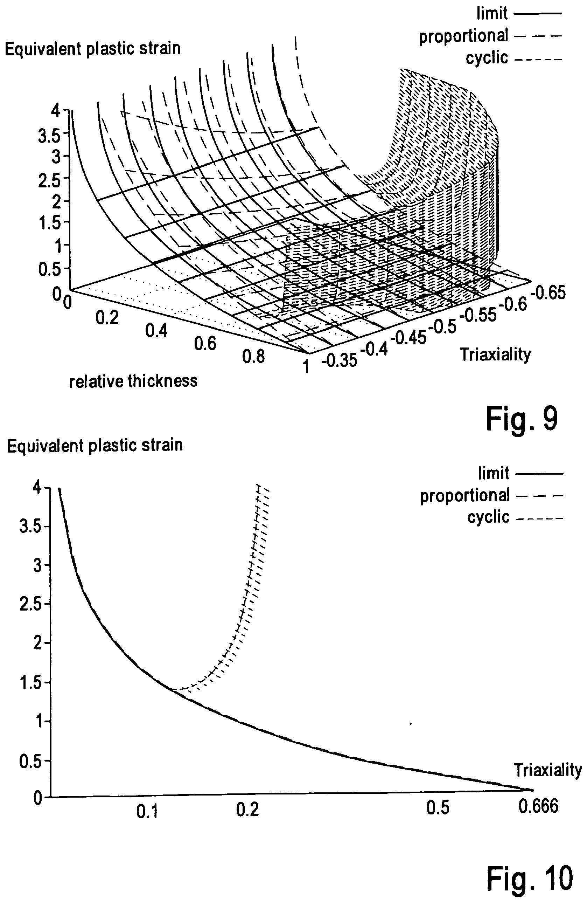

Durch Wiederholen der inkrementalen Prozedur mit einer von Null verschiedenen anfänglichen äquivalenten plastischen Verformung kann der Einfluss von Belastungszyklen bei konstanter Triaxialität vor der Einschnürung berücksichtigt werden. Figur 9 zeigt eine Lokalisierungsfläche, die den Raum auf einer Seite der proportionalen Lokalisierungslinie abdeckt. Figur 10 zeigt eine Schnittansicht für eine Triaxialität +2/3 (äquibiaxialer Zug).

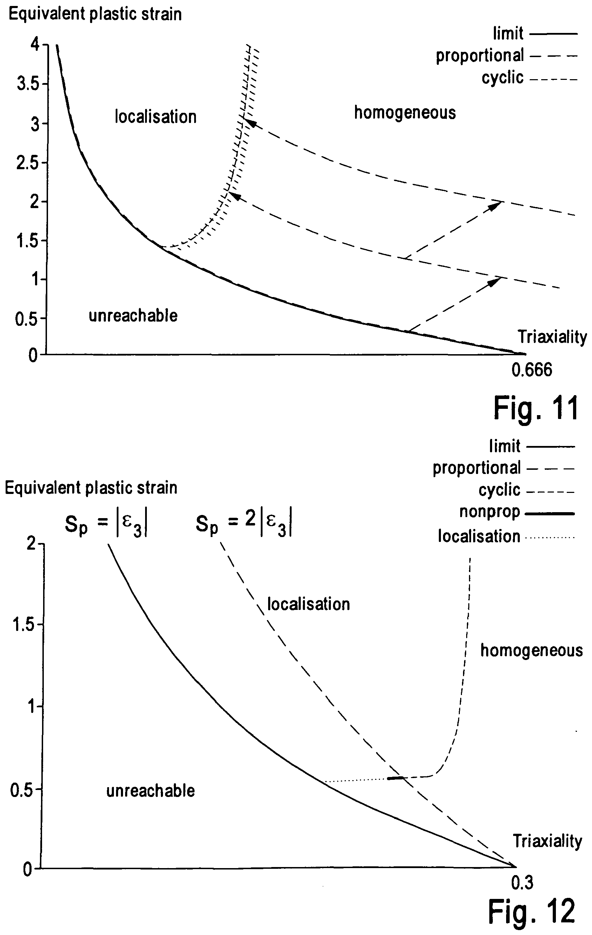

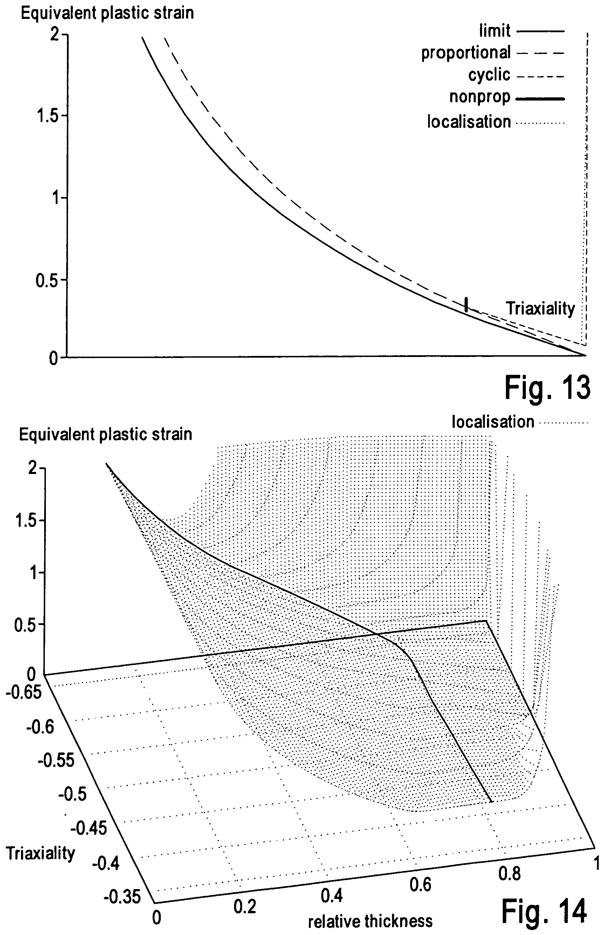

In Figur 11 sind verschiedene Belastungswege angegeben. Figur 12 zeigt eine Schnittansicht für eine Triaxialität +1/3, Figur 13 für eine Triaxialität $+\sqrt{\dfrac{1}{3}}$.

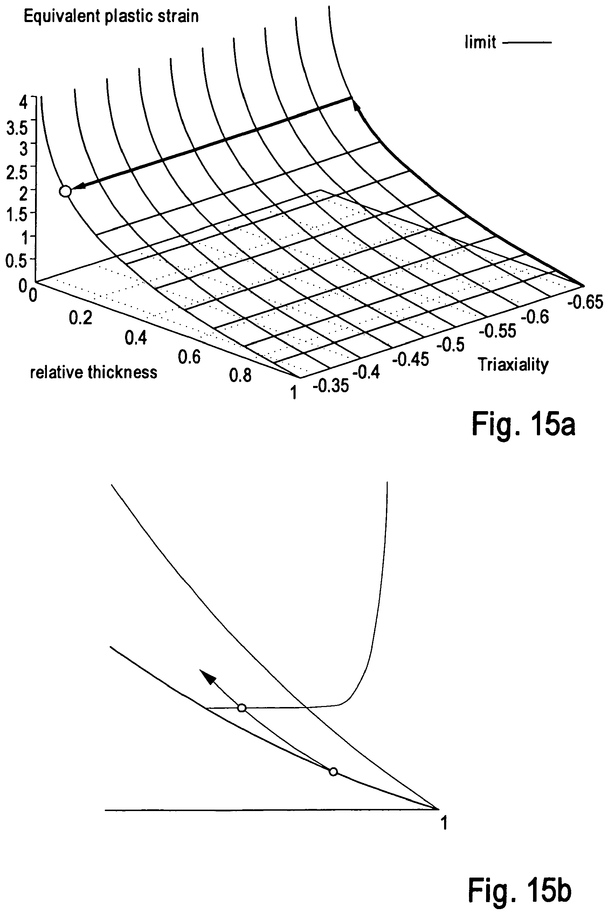

Bereiche der Lokalisierungsfläche, die dem Verfahren nicht zugänglich sind, werden aus den vorhandenen Punkten extrapoliert, bis sie die untere Grenzfläche schneidet. Figur 14 zeigt ein Beispiel, in den Figuren 15a und 15b ist ein Beispiel für einen Belastungspfad gegeben.

## Patentansprüche

**1.** Computerimplementiertes Verfahren zur Anwendung in der Steuerung und Regelung von Umformmaschinen zum Zweck der Bestimmung von Instabilitätszuständen beim Umformen von Flachhalbzeugen mit dem Ziel, Instabilitätszustände zu vermeiden durch begleitende numerische Berechnungen innerhalb einer softwaretechnisch implementierten Optimierungsumgebung während der Produktion, umfassend die Schritte:

(a) Bereitstellen von charakteristischen Merkmalen des Flachhalbzeuges und/oder des Materials, aus dem das Flachhalbzeug hergestellt ist, um Verformungsparamater zu ermitteln, in einer Datenbank eines Computers;

(b) Bestimmen der äquivalenten plastischen Verformung ($\varepsilon_p$) in Abhängigkeit von der Triaxialität $(\dfrac{p}{\sigma_{vm}})$ auf mindestens einem vorab festgelegten Belastungsweg, der proportionale und/oder nicht proportionale Belastungsanteile umfasst, wobei p = tr(σ)/3 der hydrostatische Anteil der Spannungen ist und $\sigma_{vm}$ die von Mises-Vergleichsspannungen darstellt, unter Verwendung der in der Datenbank bereitgehaltenen charakteristischen Merkmale oder der daraus ermittelten Verformungsparameter;

(c) Aufspannen eines dreidimensionalen Raumes mit den Koordinatenachsen $\dfrac{p}{\sigma_{vm}}$, $t/t_0$, $\varepsilon_p$, wobei $t/t_0$ ein exemplarisches Maß für die Dickenänderung des Flachhalbzeuges ist und

$$-\frac{2}{3} \leq \frac{p}{\sigma_{vm}} \leq \frac{2}{3};\ 0 \leq \frac{t}{t_0} \leq 1;\ \varepsilon_p \geq 0;$$

und
(d) Erzeugen der Fläche

$$\varepsilon_p = f\left(\left|\ln\frac{t}{t_o}\right|; \frac{p}{\sigma_{vm}}\right)$$ in dem dreidimensionalen Raum.

**2.** Computerimplementiertes Verfahren nach Anspruch 1, bei dem der Schritt (b) weiter umfasst: für jeden Wert der Triaxialität

(b1) Berechnen der äquivalenten plastischen Verformung ($\varepsilon_1^A$) eines Hauptgebietes (A) des Flachhalbzeuges in einer ersten Hauptrichtung (1) als Minimum über alle Ausrichtungen ($\psi$) einer Einschnürung (B) in dem Hauptgebiet (A);

(b2) Berechnen der äquivalenten plastischen Verformung ($\varepsilon_2^A$) des Hauptgebietes (A) in einer zweiten Hauptrichtung (2) für den Wert der Triaxialität;

(b3) Berechnen der äquivalenten plastischen Deformation $\Delta\varepsilon_p$.

**3.** Computerimplementiertes Verfahren nach Anspruch 2, bei dem der Schritt (b1) inkremental ausgeführt wird.

**4.** Computerlesbares Medium, auf dem Befehle eines Computerprogramms gespeichert sind, das auf einem Speicher eines Computersystems eines Benutzers gespeichert und installiert werden soll, wobei die Befehle, wenn sie von dem Computersystem gelesen werden, bewirken, dass das Computersystem das Verfahren eines der Ansprüche 1-3 ausführt.

**5.** Computersystem, das aufweist:

- einen Speicher zum Speichern eines Computerprogramms;
- einen Prozessor, der so ausgelegt ist, dass er auf den Speicher zugreift, um Befehle des Computerprogramms zu lesen und auszuführen; und
- eine Ausgabeeinheit,

wobei die Befehle bewirken, dass der Prozessor das Verfahren eines der Ansprüche 1-3 ausführt.

**Claims**

**1.** A computer-implemented method for controlling and regulating of forming machines for the purpose of determining instability states during the forming of flat semi-finished products aiming at avoiding instability states by accompanying numerical calculations within a software-implemented optimization environment during production, comprising the steps:

(a) providing characteristics of the flat semi-finished product and/or the material from which the flat semi-finished product is made to determine deformation parameters in a database of a computer;

(b) determining the equivalent plastic deformation ($\varepsilon_p$) as a function of the triaxiality $\left(\dfrac{p}{\sigma_{vm}}\right)$ on at least one predetermined load path comprising proportional and/or non-proportional load components, where $p = \mathrm{tr}(\sigma)/3$ is the hydrostatic component of the stresses and $\sigma_{vm}$ represents the comparative stresses of Mises, using the characteristics stored in the database or the deformation parameters determined therefrom;

(c) spanning a three-dimensional space with coordinate axes $\dfrac{p}{\sigma_{vm}}$, $t/t_0$, $\varepsilon_p$, where $t/t_0$ is an exemplary measure of the change in thickness of the flat semi-finished product and

$$-\frac{2}{3} \leq \frac{p}{\sigma_{vm}} \leq \frac{2}{3};\ 0 \leq \frac{t}{t_0} \leq 1;\ \varepsilon_p \geq 0;$$

and

(d) generating the surface

$$\varepsilon_p = f\left(\left|\ln\frac{t}{t_o}\right|; \frac{p}{\sigma_{vm}}\right)$$

in the three-dimensional space.

**2.** The computer-implemented method according to claim 1, in which step (b) further comprises:
for each value of the triaxiality

(b1) calculating the equivalent plastic deformation ($\varepsilon_1^A$) of a main region (A) of the flat semi-finished product in a first main direction (1) as a minimum over all orientations ($\psi$) of a constriction (B) in the main region (A);

(b2) calculating the equivalent plastic deformation ($\varepsilon_2^A$) of the main region (A) in a second main direction (2) for the value of the triaxiality;

(b3) calculating the equivalent plastic deformation $\Delta\varepsilon_p$.

**3.** The computer-implemented method according to claim 2, in which step (b1) is performed incrementally.

**4.** A computer-readable medium having stored thereon instructions of a computer program to be stored and installed on a memory of a computer system of a user, the instructions, when read by the computer system, causing the computer system to perform the method of any one of claims 1-3.

**5.** A computer system that comprises:

- a memory to store a computer program;
- a processor adapted to access the memory to read and execute instructions of the computer program; and
- an output unit,

wherein the instructions cause the processor to execute the method of any one of claims 1-3.

**Revendications**

**1.** Procédé implémenté par ordinateur destiné à une application dans le contrôle et la régulation de machines de formage afin de déterminer des états d'instabilité lors du formage de produits semi-finis plats, avec pour objectif d'éviter les états d'instabilité par des calculs numériques d'accompagnement à l'intérieur d'un environnement d'optimisation implémenté de manière logicielle pendant la production, comprenant les étapes suivantes :

(a) mise à disposition de caractéristiques du produit semi-fini plat et/ou du matériau dont est constitué le produit semi-fini plat, afin de déterminer des paramètres de déformation, dans une base de données d'un ordinateur;

(b) détermination de la déformation plastique équivalente ($\varepsilon_p$) en fonction de la triaxialitié ($p/\sigma_{vm}$) sur au moins un trajet de charge préalablement déterminé, qui comprend des parties de charges proportionnelles et/ou non proportionnelles, $p = \mathrm{tr}(\sigma)/3$ étant la partie hydrostatique des contraintes et $\sigma_{vm}$ représentant les contraintes équivalentes de von Mises, à l'aide des caractéristiques mises à disposition dans la base de données ou des paramètres de déformations qui en sont déduits ;

(c) déploiement d'un espace tridimensionnel avec les axes de coordonnées $p/\sigma_{vm}$, $t/t_0$, $\varepsilon_p$, $t/t_0$ étant une mesure exemplaire pour la variation d'épaisseur du produit semi-fini plat et

$$-\frac{2}{3} \le \frac{p}{\sigma_{vm}} \le \frac{2}{3};\ 0 \le \frac{t}{t_0} \le 1;\ \varepsilon_p \ge 0;$$

et

(d) génération de la surface

$$\varepsilon_p = f\left(\left|\ln\frac{t}{t_o}\right|; \frac{p}{\sigma_{vm}}\right)$$

dans l'espace tridimensionnel.

**2.** Procédé implémenté par ordinateur selon la revendication 1, dans lequel l'étape (b) comprend en outre :
pour chaque valeur de la triaxialité :

(b1) calcul de la déformation plastique équivalente ($\varepsilon_1^A$) d'une zone principale (A) du produit semi-fini plat dans une première direction principale (1) en tant que minimum sur toutes les orientations ($\psi$) d'un rétrécissement (B) dans la zone principale (A) ;
(b2) calcul de la déformation plastique équivalente ($\varepsilon_2^A$) de la zone principale (A) dans une deuxième direction principale (2) pour la valeur de la triaxialité;
(b3) calcul de la déformation plastique équivalente $\Delta\varepsilon_p$.

3. Procédé implémenté par ordinateur selon la revendication 2, dans lequel l'étape (b1) est exécutée de manière incrémentale.

4. Support lisible par un ordinateur sur lequel sont stockés les instructions d'un programme informatique, qui est enregistré et qui doit être installé sur un système informatique d'un utilisateur, les instructions, lorsqu'elles sont lues par le système informatique, faisant en sorte que le système informatique exécute le procédé selon l'une des revendications 1 à 3.

5. Système informatique qui comprend :

- une mémoire pour le stockage d'un programme informatique ;
- un processeur qui est conçu de façon à avoir accès à la mémoire afin de lire et d'exécuter les instructions du programme informatique; et
- une unité de sortie,

les instructions faisant en sorte que le processeur exécute le procédé selon l'une des revendications 1 à 3.

$\varphi_1 = -2\varphi_2$ $\varphi_1$ $\varphi_1 = \varphi_2$

$\varphi_1 = -\varphi_2$

FLC

"plane strain"

Tiefziehen

einachsiger Zug

gleichachsiges Streckziehen

Hypothese eines
proportionalen Dehnpfads

b < 0          b > 0          $\varphi_2$

**Fig. 1**

$\varphi_1$          FLC

Versagen

gut

gut

gut

Hypothese eines
proportionalen Dehnpfads

$\varphi_2$

**Fig. 2**

Fig. 3

Fig. 4

**Fig. 5**

START

1 — Inkrementiere $b$

2 — Inkrementiere $\psi_0$

3 — Für jedes $b$: Inkrementiere $\varepsilon_1^A$

4 — Berechne $\sigma_1^A$

5 — Berechne aktuellen Orientierungswinkel $\psi$ der Einschnürung und damit $f = \sigma_{nn}^A \, t^A$

6 — Inkrementiere $\varepsilon_p^R$

7 — Berechne Hilfskoeffizienten

8 — Berechne $f^B = \sigma_{nn}^B \cdot t^B$

9 — $f^A = f^B$ ? — Ja / Nein — Gehe zu 6

$\Delta\varepsilon_p^R > \Delta\varepsilon_p^1$ — Ja / Nein — Gehe zu 3

10 — Speichere $(\psi, \varepsilon_1^A)$

11 — Suche Minimum über alle $\psi$ $\Rightarrow (b, \varepsilon_1^A)$ $\Rightarrow (\varepsilon_2^A, \varepsilon_1^A)$

Max $(b)$ ? — Ja / Nein — Gehe zu 1

ENDE

START

Wähle Winkelteilung für jedes Element

Für jedes Element und jeden Zeitschritt: $\dot{\varepsilon}$ bestimme $\sigma$

Berechne b, $\Delta\varepsilon_p^1$

Für jedes Element: Berechne $\Psi_0$ in der vorab gewählten Winkelteilung

Für jede Winkelteilung: Speichere $\Psi_n$ im Elementesystem und transformiere beim nächsten Zeitschritt ins Hauptsystem

Für jede Winkelteilung: Berechne $\Psi_{n+1}, \sigma_{nn}^A$ und $f^A$

Gehe zu Figur 3, Schritt 6

Fig. 6

Fig. 7

Fig. 8

Fig. 9

Fig. 10

25

Fig. 11

Fig. 12

Equivalent plastic strain

| | |
|---|---|
| limit | —————— |
| proportional | — — — |
| cyclic | - - - - - |
| nonprop | ▬▬▬▬ |
| localisation | ·············· |

Triaxiality

**Fig. 13**

Equivalent plastic strain

localisation ···········

Triaxiality

relative thickness

**Fig. 14**

Fig. 15a

Fig. 15b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1983455 A2

**In der Beschreibung aufgeführte Nicht-Patentliteratur**

- **MERDAN BASARAN et al.** *An Extension of the GISSMO Damage Model Based on Lode Angle Dependence*
- **NORMAN HERZIG et al.** *Experimentelle Ermittlung und Modellierung dynamischer Fließortkurven an Blechwerkstoffen*
- **WIERZBICKI et al.** Calibration and evaluation of seven fracture models. *International Journal of Mechanical Sciences,* 2005
- Limit Strains in the Processes of Stretch-Forming Sheet Metal. **Z. MARCINIAK ; K. KUCZYNSKI.** Int. J. Mech. Sci. Pergamon Press Ltd, 1967, vol. 9, 609-620
- Sheet Necking-II. Time-independent behavior. **J.W. HUTCHINSON ; K.W. NEALE.** Mechanics of Sheet Metal Forming. 1978, vol. 237, 127-153